# FASCICULE DE BREVET EUROPEEN

(11) **EP 1 050 643 B1**
(45) Date de publication et mention de la délivrance du brevet: **02.11.2005**
(21) Numéro de dépôt: 00401158.1
(22) Date de dépôt: 27.04.2000
(51) Int. Cl.: E05B 65/12

(54) **Serrure comprenant un actionneur électrique en particulier pour ouvrant de véhicule automobile**
Schloss mit elektrischer Betätigungsvorrichtung, insbesondere für ein Kraftfahrzeugtürschloss
Lock comprising electric actuator in particular for a vehicle door lock

(30) Priorité: 06.05.1999 FR 9905769
(43) Date de publication de la demande: 08.11.2000
(73) Titulaire: VALEO SECURITE HABITACLE S.A.S., 94042 Créteil Cédex (FR)
(72) Inventeur: Dupont, Patrick, 80860 Noyelles Sur Mer (FR); Lasson, Olivier, 80132 Neufmoulin (FR); Boulay, Jean-Claude, 94000 Creteil (FR)
(74) Mandataire: Rosolen-Delarue, Katell

(56) Documents cités:
- EP-A- 0 280 755
- DE-A- 19 649 548
- PATENT ABSTRACTS OF JAPAN vol. 1998, no. 2, 30 janvier 1998 (1998-01-30) & JP 09 280267 A (YUKIHIRO)

## Description

L'invention est relative à une serrure comprenant un actionneur électrique avec des moyens moteurs pour commander le déplacement d'un élément de la serrure, soumis à une charge susceptible de varier, en vue d'assurer l'ouverture de la serrure.

L'invention concerne plus particulièrement, mais non exclusivement, une telle serrure électrique pour ouvrant de véhicule automobile.

Par le document DE-A-196 49 548 on connait une serrure comprenant un actionneur électrique comportant entre le moteur et l'élément à déplacer, des moyens d'embrayage à degré variable selon les révolutions de la partie actionnée.

Une serrure électrique, notamment pour ouvrant de véhicule automobile, vise à permettre la suppression des liens mécaniques pour l'ouverture et la condamnation, et à assurer une assistance d'ouverture électrique grâce par exemple à une énergie de secours intégrée. Une telle serrure électrique doit en outre être compatible avec un système de commande mains libres.

Différents paramètres mécaniques et électriques contradictoires doivent être satisfaits pour répondre aux besoins du marché sur ce type de serrure entièrement électrique.

Un premier paramètre concerne le cas d'une charge ou d'un effort exceptionnel exercé sur l'élément de la serrure à déplacer. L'ouverture doit pouvoir être assurée sous un tel effort exceptionnel, en mode de fonctionnement normal comme en mode secours, sans contrainte de temps pour la fonction d'ouverture. Dans le cas de véhicules automobiles, l'effort exceptionnel imposé par le cahier des charges peut atteindre au moins 5000 N (5000 newtons).

Un deuxième paramètre concerne la compatibilité mains libres. Ceci correspond au cas de fonctionnement normal. L'ouverture sous une charge de 600 N, considérée comme étant la réaction exercée par le joint de l'ouvrant sur un véhicule, doit être effectuée dans un temps maximum de 55 ms sur alimentation électrique de la batterie principale du véhicule (12 V). Seul le mode de fonctionnement normal est concerné par cette exigence.

Un troisième paramètre concerne le fonctionnement en mode de secours électrique. Il faut que l'énergie pour assurer l'ouverture soit limitée, car cette énergie est tirée d'une source électrique de secours, par exemple deux piles intégrées à la serrure. Cette énergie de secours doit être limitée en courant (pointe en intensité) et en durée (quantifiée en centaine de ms).

Les exigences correspondant à ces trois paramètres pour la serrure électrique sont difficiles à satisfaire.

L'invention a pour but, surtout, de fournir une serrure avec actionneur électrique qui permette de satisfaire à ces exigences tout en restant d'une conception relativement simple, économique et robuste, et tout en assurant un fonctionnement fiable.

Selon l'invention, une serrure, en particulier pour ouvrant de véhicule automobile, comprenant un actionneur électrique, avec des moyens moteurs pour commander le déplacement d'un élément de la serrure soumis à une charge susceptible de varier, en vue d'assurer l'ouverture de la serrure, est caractérisée par le fait que l'actionneur comporte, entre les moyens moteurs et l'élément de serrure à déplacer, des moyens réducteurs à variation de rapport de réduction automatique selon la charge à vaincre.

L'expression "moyens réducteurs" désigne de manière générale des moyens de transmission dont le rapport de réduction peut être inférieur à 1 (auquel cas il y a multiplication) ou supérieur à 1 (auquel cas il y a effectivement réduction).

Avantageusement, les moyens moteurs de l'actionneur comprennent un unique moteur électrique.

Les moyens réducteurs à variation de rapport de réduction automatique peuvent comprendre un moyen de débrayage permettant de passer d'une configuration avec faible rapport de réduction à une configuration avec grand rapport de réduction, et des moyens de ré-embrayage dans cette dernière configuration.

Le quotient entre le grand rapport de réduction et le faible rapport de réduction peut être de l'ordre de 7 à 10.

Les moyens réducteurs à variation de rapport de réduction automatique comprennent avantageusement deux engrenages non circulaires, par exemple elliptiques. De préférence, les deux engrenages elliptiques sont identiques, l'un étant moteur et l'autre suiveur; l'engrenage elliptique moteur est entraîné en rotation autour de l'un de ses foyers tandis que l'engrenage elliptique suiveur est également monté rotatif autour de l'un de ses foyers, la distance entre les deux foyers formant centres de rotation des deux engrenages elliptiques étant constante et égale à la longueur du grand axe des ellipses. Dans la position correspondant au petit rapport de réduction les engrenages sont tangents en leurs sommets respectivement celui éloigné du centre de rotation de l'engrenage moteur et celui proche du centre de rotation de l'engrenage suiveur. Cette configuration géométrique est telle que le point de contact entre les deux engrenages, lors de la rotation de l'engrenage moteur, se déplace sur une droite joignant les centres de rotation de chaque engrenage elliptique.

De préférence l'engrenage elliptique suiveur est lié en rotation à un engrenage cylindrique par un moyen de débrayage autorisant un déplacement différentiel, et un moyen de ré-embrayage est prévu en fin du déplacement différentiel, l'engrenage cylindrique étant lié à l'élément de serrure à déplacer.

Le moyen de débrayage peut comprendre un ressort de torsion propre à transmettre un couple suffisant pour vaincre la faible charge avec le faible rapport de réduction, tandis que pour une charge plus forte, le ressort de torsion cède en permettant une rotation différentielle de l'engrenage suiveur relativement à l'engrenage cylindrique, sans entraîner l'élément de serrure, jusqu'au moyen de ré-embrayage formé par une butée solidaire de l'engrenage cylindrique, et propre à coopérer avec l'engrenage elliptique suiveur dans une position correspondant au rapport de réduction maximal, ce qui permet l'entraînement de la charge plus forte.

Un autre organe de butée, pour remise à zéro, peut être prévu pour le retour à la position initiale de l'engrenage cylindrique et de l'élément de serrure, afin de permettre l'entraînement de cet élément par l'engrenage elliptique suiveur lors du retour de cet engrenage à sa position initiale.

L'invention consiste, mises à part les dispositions exposées ci-dessus, en un certain nombre d'autres dispositions dont il sera plus explicitement question ci-après à propos d'un exemple de réalisation décrit avec référence au dessin ci-annexé, mais qui n'est nullement limitatif.

Sur ce dessin :
- la figure 1 est un schéma d'une serrure avec actionneur électrique selon l'invention ;
- la figure 2 est un schéma, avec représentation symbolisée, d'un actionneur à engrenages elliptiques, dans une position initiale à faible rapport de réduction ;
- la figure 3 illustre la fin de l'entraînement d'une faible charge ;
- la figure 4 illustre le retour à la position initiale ;
- la figure 5 illustre la position initiale sous forte charge ;
- la figure 6 illustre le début du déplacement sous forte charge ;
- la figure 7 illustre la poursuite du déplacement de l'engrenage suiveur, sans entraînement de la charge, avec variation du rapport de réduction ;
- la figure 8 illustre l'arrivée en butée de l'engrenage suiveur pour entraînement de la forte charge avec rapport de réduction maximal ;
- la figure 9 illustre la fin d'entraînement sous forte charge ;
- la figure 10 illustre le début du retour à la position initiale ;
- les figures 11 à 14 illustrent des phases du retour à la position initiale.

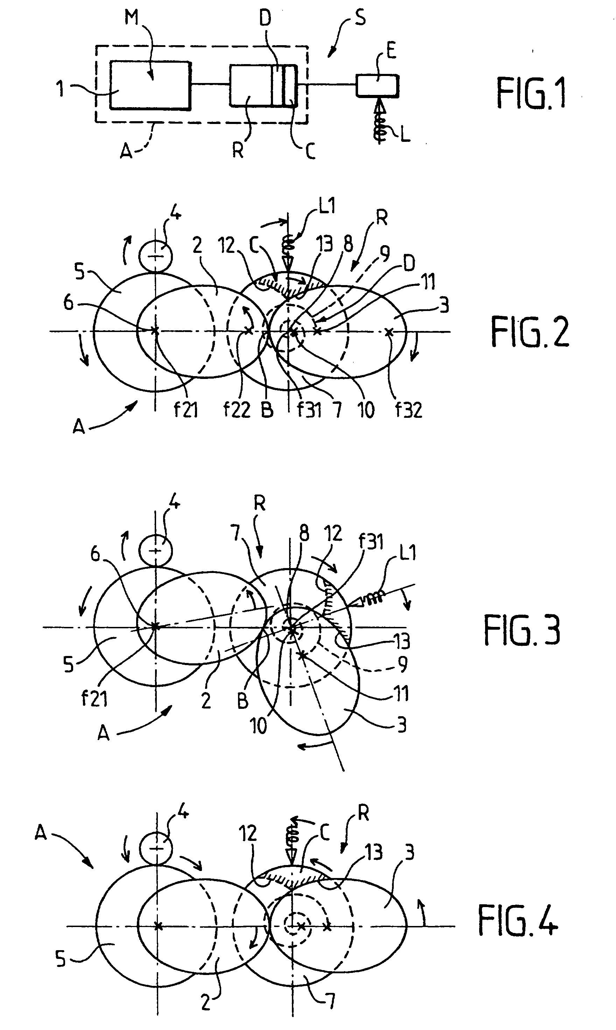

En se reportant au dessin, notamment à la figure 1, on peut voir une représentation schématique d'une serrure électrique S, en particulier pour ouvrant (par exemple portière ou hayon) de véhicule automobile.

La serrure S comprend un actionneur électrique A comportant des moyens moteurs électriques M pour commander le déplacement d'un élément E de la serrure en vue d'assurer l'ouverture. L'élément E peut être constitué par un cliquet (non représenté) qui coopère avec un pêne (non représenté) ; le déplacement du cliquet permet de libérer le pêne pour l'ouverture.

L'élément E est soumis à une charge L susceptible de varier. L'actionneur A doit vaincre cette charge pour assurer le déplacement de l'élément E.

Une telle serrure électrique doit répondre, en particulier dans le cas d'un véhicule automobile, à différentes exigences relativement contradictoires.

Par exemple, pour une portière de véhicule automobile, la serrure électrique doit satisfaire aux exigences exposées précédemment :
- Aptitude à s'ouvrir sous un effort exceptionnel, quantifié à 5000 N aussi bien en mode normal, c'est-à-dire lorsque les moyens moteurs M sont alimentés par la batterie principale du véhicule, comme en mode secours, c'est-à-dire lors de l'utilisation d'une source électrique de secours pour intervenir en cas de défaillance de la batterie principale. Aucune contrainte de temps n'est imposée pour cette fonction d'ouverture sous effort exceptionnel.
- Compatibilité mains libres : la serrure doit pouvoir s'ouvrir sous un effort de 600 N, correspondant à la réaction du joint de portière, dans un temps maximum de 55 ms sur alimentation de la batterie principale, généralement à 12 V. Le mode secours n'est pas concerné par cette exigence.
- Secours électrique : l'énergie disponible, dans le cas où le secours électrique est mis en oeuvre, est limitée puisque tirée d'une source de secours, généralement deux piles intégrées à la serrure, qui sert d'alimentation à un système électronique d'élévation de tension pour charge d'un condensateur tampon, lequel alimente concrètement les moyens moteurs électriques M d'ouverture de la serrure. L'énergie de secours exigée doit être limitée en courant (pointe en ampères) et en durée, exprimée en centaines de ms (millisecondes).

Pour satisfaire à ces exigences, selon l'invention, l'actionneur A comporte, entre les moyens moteurs M et l'élément de serrure E à déplacer, des moyens réducteurs R à variation de rapport de réduction automatique selon la charge L à vaincre. Par "moyens réducteurs" R, on désigne de manière générale des moyens de transmission qui peuvent être multiplicateurs (rapport de réduction inférieur à 1) ou effectivement réducteurs (rapport de réduction supérieur à 1).

Les moyens moteurs M de l'actionneur comprennent de préférence un unique moteur électrique 1. Pour l'ouverture sous effort exceptionnel, les moyens réducteurs R assurent une grande réduction entre le moteur 1 et l'élément E pour assurer l'entraînement de la forte charge L par le moteur 1, alors qu'aucune contrainte de temps d'alimentation n'est imposée.

Pour l'ouverture (compatibilité mains libres) dans les conditions normales, les moyens réducteurs R se calent sur une petite réduction entre le moteur 1 et l'élément E ce qui permet de réaliser l'ouverture dans le temps demandé.

Les moyens réducteurs R comprennent avantageusement un moyen de débrayage D permettant de passer d'une configuration avec petit rapport de réduction à une configuration avec grand rapport de réduction, et un moyen de ré-embrayage C dans cette dernière configuration avec grand rapport de réduction.

Selon un mode de réalisation particulier avantageux, les moyens réducteurs R comprennent deux pignons non circulaires, par exemple elliptiques 2, 3 identiques en prise, schématiquement représentés sans leurs dents d'engrenage sur les figures 2 et suivantes . Le pignon elliptique 2 est le pignon moteur tandis que le pignon elliptique 3 est suiveur.

Deux engrenages cylindriques circulaires 4, 5 symbolisent une "n ième" réduction d'un train d'engrenages cylindriques. L'engrenage 4 de petit diamètre est moteur et entraîne la roue 5 de plus grand diamètre avec un rapport de réduction.

L'engrenage cylindrique circulaire 5 tourne autour de son centre 6. L'engrenage elliptique 2 est solidaire de la roue 5 et est disposé de manière telle qu'un des foyers f21 de l'ellipse 2 soit confondu (en projection sur le plan de la figure 2) avec le centre 6. Ainsi, la rotation de la roue 5 provoque la rotation de l'engrenage elliptique 2 autour de son foyer f21.

L'autre foyer de l'engrenage elliptique 2 est désigné par f22.

L'engrenage elliptique suiveur 3 est lié à un engrenage cylindrique circulaire 7 propre à transmettre le mouvement à l'élément E (non représenté sur les figures 2 à 14) par des moyens non représentés. L'engrenage 7 est monté rotatif autour de son centre 8 qui est confondu (en projection sur le plan de la figure 2) avec un foyer f31 de l'ellipse 3.

La distance entre les foyers centres de rotation f21 et f31 est constante et égale à la longueur du grand axe de chaque ellipse 2, 3.

Dans la position initiale représentée sur la figure 2, les deux engrenages 2, 3 sont en prise en un point théorique de tangence B situé à l'un des sommets de chaque ellipse 2, 3. Dans cette configuration, les grands axes des deux ellipses 2 et 3 sont dans le prolongement l'un de l'autre, le point de tangence B se trouvant sur cette droite. Le foyer f31 de l'ellipse 3 est symétrique du foyer f22 par rapport au point B, tandis que l'autre foyer f32 de l'ellipse 3 est symétrique du foyer f21 par rapport au point B.

Cette configuration initiale correspond à un faible rapport de réduction de l'engrenage 2 moteur vers l'engrenage 3 suiveur . Ce rapport de réduction, dans le cas présent, est inférieur à 1 et correspond à une amplification ou multiplication puisque la distance f21-B est supérieure à la distance B-f31.

Le moyen de débrayage D est prévu pour assurer la transmission du mouvement de rotation entre l'engrenage elliptique 3 et l'engrenage cylindrique circulaire 7 sous un couple inférieur à une limite déterminée.

Le moyen de débrayage D est constitué par un élément élastique 9 du genre ressort de torsion en spirale. L'extrémité intérieure du ressort 9 est fixée en un point 10 de l'engrenage elliptique 3, dont le rayon polaire par rapport au centre 8 est réduit. L'autre extrémité du ressort 9 est fixée en un point 11, de plus grand rayon polaire, de l'engrenage cylindrique circulaire 7.

Dans la position initiale illustrée sur la figure 2, les points 10 et 11 peuvent, par exemple, se trouver sur la droite des grands axes des ellipses 2 et 3.

Le ressort de torsion 9 est choisi de manière à pouvoir transmettre, sans se déformer sensiblement, entre l'engrenage elliptique 3 et l'engrenage cylindrique 7, un couple suffisant pour déplacer l'engrenage 7, avec faible rapport de réduction, à l'encontre de la faible charge simulée par la flèche L1.

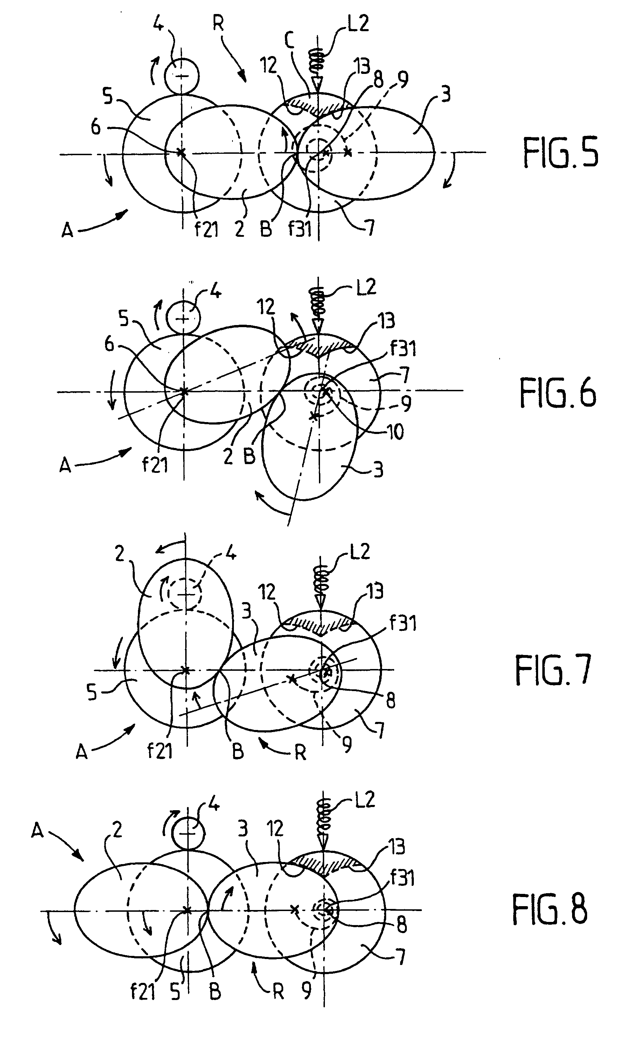

Une butée 12, ou forme d'entraînement, solidaire de l'engrenage 7 est prévue pour coopérer avec l'engrenage elliptique 3 lorsque ce dernier a tourné de 180° relativement à l'engrenage 7 comme illustré sur la figure 8. La butée 12 constitue un moyen de ré-embrayage.

Une autre butée 13, ou forme d'entraînement, est prévue pour coopérer avec l'engrenage elliptique 3 dans la position initiale de la figure 2. Cette butée 13 est disposée de manière à être repoussée par l'engrenage elliptique 3 lorsque ce dernier tourne dans le sens contraire d'horloge autour du foyer f31.

Selon la représentation schématique des dessins, les deux butées 12, 13 sont limitées par des arcs d'ellipse symétriques par rapport à un diamètre de l'engrenage cylindrique circulaire 7.

Le ressort de torsion 9 est choisi de manière à ne pas pouvoir transmettre un couple suffisant pour entraîner l'engrenage cylindrique circulaire 7 lorsque ce dernier est soumis à une forte charge L2, comme illustré sur les figures 5 et suivantes. Dans ce cas, l'engrenage elliptique 3 peut tourner dans le sens d'horloge, autour du foyer f31, à partir de la position de la figure 2, sans entraîner l'engrenage 7, jusqu'à venir en appui contre la butée 12.

Ceci étant, le fonctionnement de l'actionneur électrique A de la serrure, pour assurer le déplacement de l'élément E en vue de l'ouverture, est le suivant.

On envisage tout d'abord le cas où l'élément E, entraîné à partir de l'engrenage cylindrique circulaire 7 de la figure 2, n'est soumis qu'à une faible charge représentée par L1 sur la figure 2.

La mise en action du moteur électrique 1 provoque l'entraînement en rotation des engrenages 4 et 5. Pour les explications, on suppose que l'engrenage cylindrique 5 est entraîné dans le sens contraire d'horloge.

L'engrenage elliptique 2, solidaire de la roue 5, va donc tourner autour de son foyer f21 (confondu avec le centre 6) dans le sens contraire d'horloge. L'autre engrenage elliptique 3 est entraîné en rotation autour de son foyer f31 (confondu avec 8) dans le sens d'horloge.

Les deux engrenages elliptiques, qui coopèrent avec leurs dents non représentées, roulent l'un contre l'autre. La géométrie est telle que le point de contact théorique B se déplace sur la droite passant par les foyers f21, f31, centres de rotation. Ce point de contact B, lorsque l'engrenage elliptique 2 tourne dans le sens contraire d'horloge, se déplace donc vers le foyer f21 en s'éloignant du foyer f31.

Dans la position de départ de la figure 2, comme déjà expliqué, le rapport de transmission entre l'engrenage elliptique 2 et l'engrenage elliptique 3 correspond à un faible rapport de réduction.

Comme par hypothèse on est dans le cas d'une faible charge, la liaison élastique assurée par le ressort 9 transmet un couple suffisant pour vaincre cette faible charge et pour entraîner en rotation, par l'engrenage elliptique 3, la roue 7 autour de son centre 8.

La roue 7 reste ainsi liée en rotation à l'engrenage elliptique 3 et tourne de la même valeur angulaire autour du point 8, comme illustré sur la figure 3. Dans le cas où la butée 13 est présente, cette butée reste en contact avec l'engrenage elliptique 3.

La fin du déplacement angulaire des engrenages elliptiques 2 et 3 est illustrée sur la figure 3. Dans l'exemple représenté, non limitatif, l'engrenage elliptique 2 a tourné d'environ 10° tandis que l'engrenage elliptique 3 et la roue 7 ont tourné d'environ 70°. A cette rotation correspond un déplacement suffisant de l'élément E pour assurer l'ouverture de la serrure.

La fin de course de la roue 7 est amortie en partie par la liaison élastique 9 entre 3 et 7.

Pour ramener le système dans sa position de départ, on commande l'inversion du sens de rotation du moteur 1 et donc des engrenages cylindriques 4 et 5. La roue 5 va tourner dans le sens d'horloge comme illustré sur la figure 4 et ramener, en fin de mouvement, les engrenages elliptiques 2 et 3 dans la position illustrée sur la figure 4 qui est identique à celle de la figure 2.

On envisage maintenant le cas où l'élément de serrure E à déplacer est soumis à une forte charge qui se retrouve au niveau de la roue 7 et qui est simulée par la flèche L2 sur les figures 5 à 14.

La position de départ de la figure 5 est semblable à celle de la figure 2, mais la charge L2 agissant sur la roue 7 est trop élevée pour que, dans la configuration de la figure 5, avec un faible rapport de réduction, le moteur 1 et l'engrenage elliptique 2 puissent vaincre la charge et entraîner la roue 7.

Le ressort de torsion 9 permet, cependant, l'entraînement en rotation de l'engrenage elliptique 3 par l'engrenage 2, mais la roue 7 reste bloquée, comme illustré sur la figure 6. L'engrenage elliptique 3 tourne alors de manière différentielle par rapport à la roue 7.

Le point de contact B entre les deux engrenages 2 et 3 se déplace vers le foyer f21 de sorte que le rapport de réduction entre les engrenages 2 et 3 augmente.

Lorsque l'engrenage 2 a tourné de 180° dans le sens contraire d'horloge autour de son foyer f21, l'engrenage elliptique 3 a tourné de 180° dans le sens d'horloge autour de son foyer f31. La configuration est alors celle représentée sur la figure 8 et le rapport de réduction entre les engrenages 2 et 3 est maximal. Dans cette position, l'engrenage elliptique 3 est venu en appui contre la butée 12 de la roue 7 de sorte que la rotation différentielle de l'engrenage 3 relativement à la roue 7 est stoppée.

Le rapport de réduction étant devenu important, le moteur 1 peut maintenant entraîner la roue 7 sous forte charge.

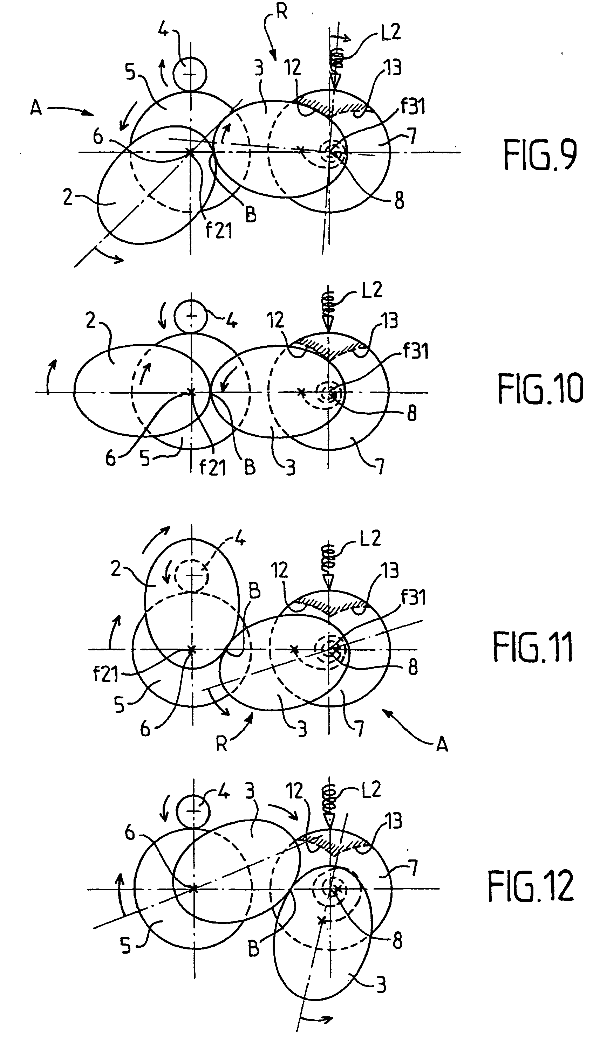

La poursuite de la rotation en sens contraire d'horloge de l'engrenage elliptique 2 assure l'entraînement en rotation dans le sens d'horloge de l'engrenage 3 et de la roue 7 comme illustré sur la figure 9 jusqu'à l'ouverture de la serrure par déplacement suffisant de l'élément E (non représenté sur la figure 9) lié à la roue 7.

L'arrêt du moteur 1 et donc de l'engrenage 2 est commandé lorsque l'ouverture de la serrure est assurée pour une rotation suffisante de la roue 7.

Le retour à la position de départ est obtenu en commandant l'inversion du sens de rotation du moteur 1 de sorte que la roue 5 et l'engrenage elliptique 2 tournent dans le sens d'horloge autour du point 6, f21. L'engrenage elliptique 3 tourne dans le sens contraire d'horloge autour du point f31.

L'engrenage elliptique 3 se dégage de la butée 12.

Concernant le comportement de la roue 7 pour le retour à la position de départ, deux cas sont possibles.

Le premier cas est celui où la charge, par son énergie emmagasinée, replace la roue 7 dans sa position d'origine. Si la charge, par sa détente, ramène la roue 7 en position de départ, la butée 13 de remise à zéro n'est pas nécessaire.

Le deuxième cas est celui où le ressort de torsion 9, qui a emmagasiné de l'énergie, maintient la roue 7 dans la position de fin de déplacement lorsque l'engrenage elliptique 3 revient vers sa position de départ par une rotation dans le sens contraire d'horloge.

Le mouvement de retour se poursuit comme illustré sur la figure 11, avec déplacement du point B de contact entre les engrenages 2 et 3 vers le point f31.

Sur cette figure 11, l'engrenage elliptique 2 a tourné de 90° par rapport à la position de la figure 10.

Le mouvement de retour se poursuivant, on arrive dans la configuration de la figure 12, la roue 7 restant toujours écartée de sa position de départ.

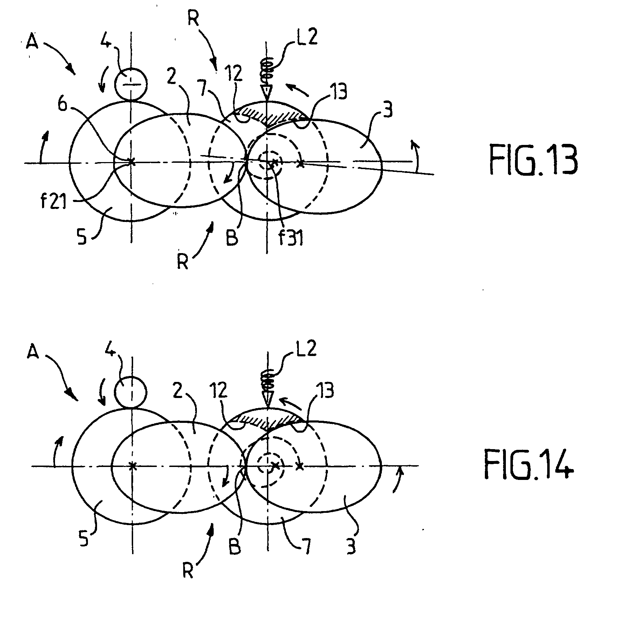

Dans l'hypothèse où la détente de la charge n'a pas ramené la roue 7 dans sa position initiale, l'engrenage elliptique 3 vers la fin de son déplacement de retour, comme illustré sur la figure 13, vient en contact avec la butée 13. La roue 7 est alors entraînée par l'engrenage elliptique 3 jusqu'à la position de départ ou position initiale illustrée sur la figure 14.

L'arrêt du moteur 1 (et donc de la roue 7 et des engrenages 2 et 3) est alors commandé. Le système élastique formé par le ressort de torsion 9 a repris sa position initiale.

L'ensemble est prêt à repartir soit avec une faible charge soit avec une forte charge s'exerçant sur la roue 7.

Le moteur électrique 1 de l'actionneur électromécanique A est utilisé dans une zone particulière de sa plage de fonctionnement correspondant au meilleur rendement électrique, c'est-à-dire à une faible charge en terme de couple, en étant doté d'un courant de couple bloqué pas trop élevé et, de plus, pendant un temps d'alimentation le plus court possible.

Le problème de l'invention est donc avantageusement résolu par l'utilisation des pignons elliptiques 2 et 3 aménagés d'un système à surcharge ou à débrayage comprenant le ressort 9.

Un seul moteur électrique 1 de consommation réduite peut ainsi actionner deux types de réductions : une petite réduction ou même une multiplication pour l'ouverture rapide sous alimentation batterie du véhicule (cas des figures 2 à 4) ; et une grande réduction pour vaincre des efforts exceptionnels, prévue pour réaliser la fonction en mode d'alimentation de secours.

De préférence, le rapport est de l'ordre de 7 à 10 entre la grande et la petite réduction.

La première course, à petite réduction, est utilisée, par exemple, pour soulever un cliquet de la serrure, dans un temps inférieur à 55 ms sous 600 N de réaction de joint. Dans la plupart des cas le cycle s'arrête à ce stade, la serrure étant ouverte.

Lorsque la serrure est contrainte par des efforts exceptionnels, la zone de débrayage/ré-embrayage va opérer.

Un choix judicieux du moteur et des différentes réductions permet de répondre à toutes les contraintes, notamment celle de pouvoir fonctionner avec une énergie de secours limitée.

## Revendications

1. Serrure comprenant un actionneur électrique (A), avec des moyens moteurs (M) pour commander le déplacement d'un élément (E) de la serrure soumis à une charge (L) susceptible de varier, en vue d'assurer l'ouverture de la serrure, en particulier pour ouvrant de véhicule automobile, **caractérisée par le fait que** l'actionneur (A) comporte, entre les moyens moteurs (M) et l'élément de serrure (E) à déplacer, des moyens réducteurs (R) à variation de rapport de réduction automatique selon la charge à vaincre.

2. Serrure selon la revendication 1, **caractérisée par le fait que** les moyens moteurs (M) de l'actionneur comprennent un unique moteur électrique (1).

3. Serrure selon la revendication 1 ou 2, **caractérisée par le fait que** les moyens réducteurs (R) à variation de rapport de réduction automatique comprennent un moyen de débrayage (D) permettant de passer d'une configuration avec faible rapport de réduction à une configuration avec grand rapport de réduction, et un moyen de ré-embrayage (C) dans cette dernière configuration.

4. Serrure selon l'une des revendications 1 à 3 , **caractérisée par le fait que** le quotient entre le rapport de grande réduction et celui de faible réduction est de l'ordre de 7 à 10.

5. Serrure selon l'une des revendications 1 à 4 , **caractérisée par le fait que** les moyens réducteurs (R) à variation de rapport de réduction automatique comprennent deux engrenages non circulaires, par exemple elliptiques (2, 3).

6. Serrure selon la revendication 5, **caractérisée par le fait que** les deux engrenages elliptiques (2, 3) sont identiques, l'un (2) étant moteur et l'autre (3) suiveur.

7. Serrure selon la revendication 6, **caractérisée par le fait que** l'engrenage elliptique moteur (2) est entraîné en rotation autour de l'un (f21) de ses foyers tandis que l'engrenage elliptique suiveur (3) est monté rotatif également autour de l'un (f31) de ses foyers, la distance entre les deux foyers (f21, f31) formant centres de rotation des deux engrenages elliptiques étant constante et égale à la longueur du grand axe des ellipses.

8. Serrure selon la revendication 7, **caractérisée par le fait que**, dans la position correspondant au petit rapport de réduction, les engrenages elliptiques (2, 3) sont tangents en leurs sommets respectivement celui éloigné du centre de rotation (f21) de l'engrenage moteur (2) et celui proche du centre de rotation (f31) de l'engrenage suiveur (3).

9. Serrure selon l'une des revendications 6 à 8, **caractérisée par le fait que** l'engrenage elliptique suiveur (3) est lié à un engrenage cylindrique (7) par un moyen de débrayage (9) autorisant un déplacement différentiel, et un moyen de ré-embrayage (12) est prévu en fin du déplacement différentiel, l'engrenage cylindrique (7) étant lié à l'élément (E) de la serrure à déplacer.

10. Serrure selon la revendication 9, **caractérisée par le fait que** le moyen de débrayage (D) comprend un ressort de torsion (9) propre à transmettre un couple suffisant pour vaincre une faible charge avec le faible rapport de réduction tandis que, pour une charge plus forte, le ressort de torsion (9) cède en permettant une rotation différentielle de l'engrenage suiveur (3) sans entraîner l'engrenage cylindrique (7), jusqu'au moyen de ré-embrayage formé par une butée (12) propre à arrêter l'engrenage suiveur (3) relativement à l'engrenage cylindrique (7) dans une position correspondant au rapport de réduction maximal.

11. Serrure selon la revendication 10, **caractérisée par le fait qu'**un autre organe de butée (13) pour remise à zéro est prévu pour le retour à la position initiale de l'élément de la serrure, afin de permettre l'entraînement de l'engrenage cylindrique (7) par l'engrenage elliptique suiveur (3) lors du retour de l'engrenage elliptique (3) à sa position initiale.

## Patentansprüche

1. Schloß mit einem elektrischen Aktuator (A), der motorische Mittel (M) zur Betätigung der Lageveränderung eines einer veränderbaren Belastungskraft (L) unterliegenden Elementes (E) des Schlosses enthält, im Hinblick auf die Sicherstellung des Öffnens des Schlosses, insbesondere für eine zu öffnende Einrichtung eines Kraftfahrzeuges, **dadurch gekennzeichnet, daß** der Aktuator (A) zwischen den motorischen Mitteln (M) und dem hinsichtlich der Lage veränderbaren Element (E) des Schlosses Getriebemittel (R) mit automatisch veränderbarem Untersetzungsverhältnis zur Überwindung der Belastungskraft umfaßt.

2. Schloß nach Anspruch 1, **dadurch gekennzeichnet, daß** die motorischen Mittel (M) des Aktuators einen einzigen elektrischen Motor (1) enthalten.

3. Schloß nach Anspruch 1 oder 2, **dadurch gekennzeichnet, daß** die Getriebemittel (R) mit automatisch veränderbarem Untersetzungsverhältnis ein Mittel zum Auskuppeln (D), das es ermöglicht, von einer Konfiguration mit geringem Untersetzungsverhältnis zu einer Konfiguration mit großem Untersetzungsverhältnis überzugehen, und ein Mittel zum Wieder-Einkuppeln (C) in diese letzte Konfiguration umfassen.

4. Schloß nach einem der Ansprüche 1 bis 3, **dadurch gekennzeichnet, daß** der Quotient aus dem Verhältnis zwischen der großen Übersetzung und demjenigen der kleinen Untersetzung in der Größenordnung von 7 bis 10 liegt.

5. Schloß nach einem der Ansprüche 1 bis 4, **dadurch gekennzeichnet, daß** die Getriebemittel (R) mit automatisch veränderbarem Übersetzungsverhältnis zwei nicht kreisförmige, beispielsweise elliptische, Getriebe (2, 3) umfassen.

6. Schloß nach Anspruch 5, **dadurch gekennzeichnet, daß** die beiden elliptischen Getriebe (2, 3) identisch ausgebildet sind, wobei es sich bei dem einen Getriebe (2) um das Motorgetriebe und bei dem anderen um das nachgeführte Getriebe (3) handelt.

7. Schloß nach Anspruch 6, **dadurch gekennzeichnet, daß** das elliptische Motorgetriebe (2) um einen seiner Brennpunkte (f21) drehbar ist, während das nachgeführte elliptische Getriebe (3) ebenfalls drehbar um einen seiner Brennpunkte (f31) montiert ist, wobei der Abstand zwischen den beiden Brennpunkten (f21, f31), welche die Drehmittelpunkte der zwei elliptischen Getriebe bilden, konstant und gleich der Länge der großen Achse der Ellipsen ist.

8. Schloß nach Anspruch 7, **dadurch gekennzeichnet, daß** in der Position, die dem kleinen Übersetzungsverhältnis entspricht, die elliptischen Getriebe (2, 3) sich mit ihren entsprechenden Spitzen, nämlich derjenigen, die entfernt von dem Drehmittelpunkt (f21) des Motorgetriebes (2) und derjenigen, die benachbart zu dem Drehmittelpunkt (f31) des nachgeführten Getriebes (3) angeordnet ist, berühren.

9. Schloß nach einem der Ansprüche 6 bis 8, **dadurch gekennzeichnet, daß** das nachgeführte elliptische Getriebe (3) mit einem Zylinderradgetriebe (7) über ein Mittel zum Auskuppeln (9) verbunden ist, welches eine differentielle Lageveränderung gestattet, und daß ein Mittel zum Wieder-Einkuppeln (12) am Ende der differentiellen Lageveränderung vorgesehen ist, wobei das Zylinderradgetriebe (7) mit dem hinsichtlich der Lage veränderbaren Element (E) des Schlosses verbunden ist.

10. Schloß nach Anspruch 9, **dadurch gekennzeichnet, daß** das Mittel zum Auskuppeln (D) eine Torsionsfeder (9) enthält, die geeignet ist, ein ausreichendes Moment zu übertragen, um eine schwache Belastungskraft bei einem kleinen Untersetzungsverhältnis zu überwinden, während bei einer stärkeren Belastungskraft die Torsionsfeder (9) nachgibt, indem sie eine differentielle Drehung des nachgeführten Getriebes (3), ohne das Zylinderradgetriebe (7) anzutreiben, erlaubt, bis das durch einen Anschlag (12) gebildete Mittel zur Wieder-Einkupplung erreicht ist, welches geeignet ist, das nachgeführte Getriebe (3) relativ zum Zylinderradgetriebe (7) in einer Position, die einem maximalen Untersetzungsverhältnis entspricht, zu halten.

11. Schloß nach Anspruch 10, **dadurch gekennzeichnet, daß** ein weiterer Anschlag (13) zur Null-Einstellung für die Rückkehr des Elementes des Schlosses in die Ausgangsstellung vorgesehen ist, um zu ermöglichen, daß das Zylinderradgetriebe (7) durch das nachgeführte elliptische Getriebe (3) in seine Ausgangsposition angetrieben wird.

## Claims

1. Lock comprising an electric actuator (A) with driving means (M) to control displacement of a lock element (E) to which a variable load (L) is applied in order to open the lock, particularly to open an automobile door, **characterised by** the fact that the actuator (A) comprises reduction means (R) with an automatic variation in the reduction ratio depending on the load to be overcome, between the driving means (M) and the lock element (E) to be displaced.

2. Lock according to claim 1, **characterised by** the fact that the driving means (M) of the actuator comprise a single electric motor (1).

3. Lock according to claim 1 or 2, **characterised by** the fact that the reduction means (R) with an automatic variation in the reduction ratio comprise a disengagement means (D) for changing from a configuration with a low reduction ratio to a configuration with a high reduction ratio, and a means of re-engagement (C) into this configuration.

4. Lock according to one of claims 1 to 3, **characterised by** the fact that the quotient between the high reduction ratio and the low reduction ratio is of the order of 7 to 10.

5. Lock according to one of claims 1 to 4, **characterised by** the fact that the reduction means (R) with an automatic variation in the reduction ratio comprise two non-circular gearwheels, for example elliptical (2,3).

6. Lock according to claim 5, **characterised by** the fact that the two elliptical gearwheels (2,3) are identical, one (2) being the driving gearwheel and the other (3) being the driven gearwheel.

7. Lock according to claim 6, **characterised by** the fact that the driving elliptical gearwheel (2) is driven in rotation about one of its focuses (f21) while the other driven elliptical gearwheel (3) is fitted also free to rotate about one (f31) of its focuses, the distance between the two focuses (f21, f31) forming centres of rotation of the two elliptical gearwheels being constant and equal to length of the major axis of.the ellipses.

8. Lock according to claim 7, **characterised by** the fact that in the position corresponding to the small reduction ratio, the elliptical gearwheels (2, 3) are tangent at their corresponding vertices, namely the vertex remote from the centre of rotation (f21) of the driving gearwheel (2) and the vertex close to the centre of rotation (f31) of the driven gearwheel (3).

9. Lock according to one of claims 6 to 8, **characterised by** the fact that the driven elliptical gearwheel (3) is linked to a cylindrical gearwheel (7) through a disengagement means (9)enabling differential displacement, and a re-engagement means (12) is provided at the end of the differential displacement, the cylindrical gearwheel (7) being linked to the element (E) of the lock to be displaced.

10. Lock according to claim 9, **characterised by** the fact that the disengagement means (D) comprises a torsion spring (9) capable of transmitting a sufficient torque to overcome a small load with the small reduction ratio while for a higher load, the torsion spring (9) gives way allowing differential rotation of the driven gearwheel (3) without driving the cylindrical gearwheel (7), to a re-engagement means formed by a stop (12) capable of stopping the driven gearwheel (3) relative to the cylindrical gearwheel (7) in a position corresponding to the maximum reduction ratio.

11. Lock according to claim 10, **characterised by** the fact that another stop device (13) intended for resetting is provided to return the lock element to the initial position so as to drive the cylindrical gearwheel (7) with the driven elliptical gearwheel (3) when the elliptical gearwheel (3) returns to its initial position.
